# EUROPEAN PATENT APPLICATION

(11) **EP 1 152 629 A1**
(43) Date of publication of application: **07.11.2001**
(21) Application number: 99959716.4
(22) Date of filing: 09.12.1999
(51) Int. Cl.: H04Q 7/38, H04L 12/56

(54) **COMMUNICATION EXCHANGE SYSTEM AND MOBILE COMMUNICATION EXCHANGE DEVICE**

(71) Applicant: MITSUBISHI DENKI KABUSHIKI KAISHA, Tokyo 100-8310 (JP)
(72) Inventor: SUE, Shigeharu, c/o Mitsubishi Denki K.K., Tokyo 100-8310 (JP); YAMADA, Yoshiko, c/o Mitsubishi Denki K.K., Tokyo 100-8310 (JP)
(74) Representative: Sajda, Wolf E., Dipl.-Phys.
(86) International application number: JP9906899
(87) International publication number: WO0143480

(57) **Abstract**

A multi-communication system of this invention includes terrestrial cellular telephone systems, a satellite cellular telephone system and a fixed telephone system capable of roaming with one another. Each of these communication systems has an all-terminal information register for registering subscriber information of all mobile stations accommodated in each cellular telephone system. The cellular telephone system registers the subscriber information transmitted from the mobile station at the time of position registration to the register of its own system and broadcasts this subscriber information to other communication systems. Receiving the subscriber information so broadcasted, the communication system registers the subscriber information to the register of its own system. Consequently, even when a line connection request to the mobile station occurs inside any communication systems, the line connection request can be directly transferred to the system to which the mobile station visits, and the incoming time to the mobile station becomes shorter.

## Description

### BACKGROUND OF THE INVENTION

### 1. Field of the Invention

This invention relates to a communication exchange system equipped with communication exchange equipment provided to each of a plurality of communication systems inclusive of a plurality of mobile communication systems and capable of roaming mutually, and an exchange for mobile communication, provided to each mobile communication system.

### 2. Description of the Related Art

Conventional communication systems have peculiar service areas and offer desired services to mobile stations existing inside the service areas. Therefore, when each mobile station moves out of the service area, it quite naturally fails to acquire desired services. When the destination of the mobile station is the service area of another mobile communication system, however, it will be convenient if the mobile station can avail itself of the services of this mobile communication system. Therefore, the conventional mobile communication systems have employed a roaming service so that the mobile stations can avail themselves of the services in the service areas of different mobile communication systems.

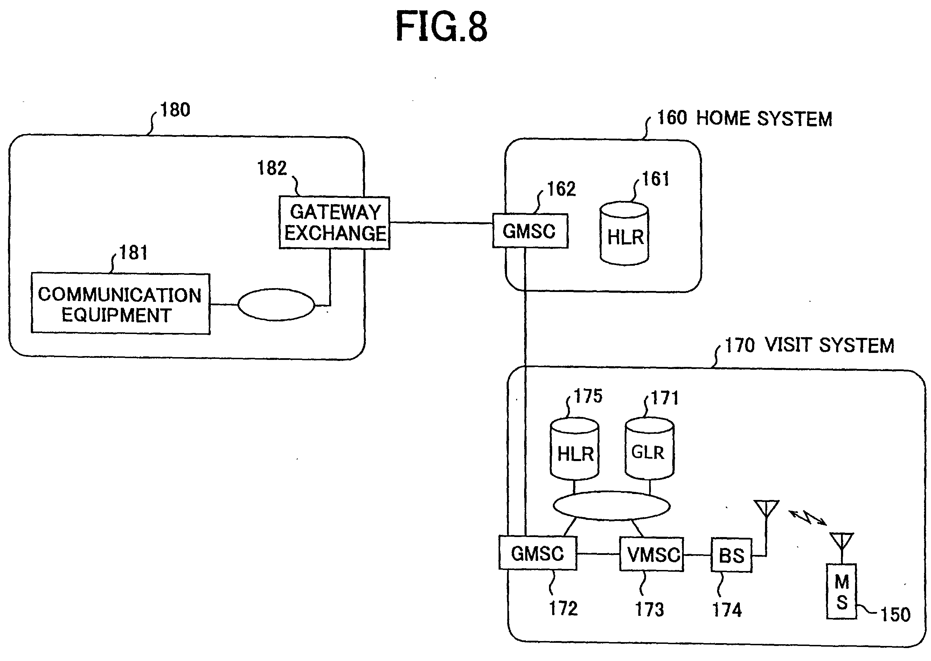

Fig. 8 is a conceptual view useful for explaining a roaming service in PDC (Personal Digital Cellular) telecommunication system as a digital cellular system in Japan (refer, for example, to Proceedings of the Institute of Electronics, Information and Communication Engineers, 4/1998, p384). A mobile station (MS) 150 registers in advance a mobile communication system 160, for example, as a home system among a plurality of mobile communication systems 160 and 170, and registers also identification information of its own station, positional information, etc, as subscriber information to a home location register (HLR) 161 provided to the home system 160.

When visiting to the service area of other mobile communication system 170 from the home system 160, the mobile station 150 requests the position registration to this visit system 170. In this case, since the mobile station 150 does not use the visit system 170 as the home, the visit system 170 transmits a roaming number representing that the mobile station 150 roams into its own system 170 to the home system 160. The home system 160 then transmits the subscriber information registered to HLR 161 to the visit system 170. The visit system 170 registers the subscriber information to a gateway location register (GLR) 171.

When, for example, the mobile station 150 exists in the home system 160, a gateway exchange 182 of a fixed telephone system 180 transmits a line connection request signal to the home system 160 when communication equipment 181 of the fixed telephone system 180 generates the line connection request to the mobile station 150. Receiving this line connection signal, the gateway exchange (GMSC) 162 of the home system 160 gains access to HLR 161, confirms the position of the mobile station 150 and executes a line connection processing.

On the other hand, when communication equipment 181 of the fixed system 180 generates the line connection request to the mobile station 150 while the mobile station 150 is roaming from the home system 160 to other mobile communication system 170, the gateway exchange 182 of the fixed system 180 gains access to the home system 160 and then transfers the line connection request signal to the home system 160.

The gateway exchange 162 of the home system 160 gains access to HLR 161. Recognizing that the mobile station 150 is roaming, the gateway exchange 162 transfers the line connection request signal to the visit system 170. The gateway exchange (GMSC) 172 of the visit system 170 gains access to GLR 171, acquires the subscriber information of the mobile station 150 and transfers the line connection signal to an inter-network exchange (VMSC) 173 governing the position of the mobile station 150. The inter-network exchange 173 thereafter executes the line connection processing through a base station (BS) 174 with the result that the line is connected.

Incidentally, reference numeral 175 denotes a device for registering the subscriber information of the mobile station 150 that uses the visit system 170 as the home.

In the conventional communication systems described above, it is necessary for the gateway exchange 182 of the communication system, in which the line connection request is generated, to first gain access to the home system 160 as the incoming processing to the mobile station 150 and then to confirm the visit system 170 of the mobile station 150 by the home system 160. In other words, when the mobile station is moving to other mobile communication system, the line connection request processing is conducted through two steps. Therefore, there remains the problem that the time necessary for incoming to the mobile station becomes elongated. This problem becomes all the more remarkable when, for example, the communication systems are so constituted as to offer the roaming service over several countries or when the roaming service is offered among satellite cellular telephone systems.

The explanation will be given in further detail. A typical example of the system for offering the roaming service over several countries is the roaming service between PDC of Japan and GSM (Global System for Mobile) communication of Europe. It will be assumed, for example, that the mobile station uses PDC as the home system. In this case, when the mobile station moves to Europe and a call is made to this mobile station from communication equipment connected to a fixed telephone system of Europe, the line connection request signal transmitted from the fixed telephone system of Europe is once transmitted to PDC in Japan and is then transferred to GSM of Europe of the visit system.

It will be assumed further that the roaming service is offered between GSM and the satellite cellular telephone system and that a mobile station uses this GSM as the home system. In this case, although the mobile station exists apparently outside the service area of GSM such as on the sea, the line connection request signal is once transmitted to GSM as the home system and is then transferred to the satellite cellular telephone system.

Therefore, the problem remains unsolved that the greater the scale of the system as a whole, the longer becomes extremely the incoming time.

### SUMMARY OF THE INVENTION

It is therefore an object of the present invention to provide a communication exchange system and an exchange for mobile communication that can solve the problems described above and can shorten the incoming time.

To accomplish the object described above, the present invention relates to a communication exchange system including a communication exchange provided to each of a plurality of communication systems inclusive of a plurality of mobile communication system and capable of roaming mutually. Here, the communication exchange controls line exchange to mobile stations on the basis of subscriber information of each mobile station when it receives a line connection request signal to the mobile station.

More specifically, the communication exchange of a plurality of the mobile communication systems includes first registering means for registering the subscriber information transmitted from the mobile station for the purpose of line exchange control, and broadcasting means for broadcasting the subscriber information transmitted from the mobile station to the communication exchange of other communication system to register the subscriber information transmitted from the mobile station to the communication exchange of the other communication system.

According to this construction, communication exchange that receives the subscriber information from the mobile station registers the subscriber information and broadcasts it to communication exchange of other communication systems. Therefore, other communication exchange receives this subscriber information and can register the subscription information so received. In other words, communication exchange can register the subscriber information of the mobile stations accommodated in other mobile communication system into its own system.

Therefore, even when the line connection request to the mobile station is generated to any communication system, the communication system that receives the line connection request can execute line-switching control by merely looking up the registration content of its own system. In comparison with the prior art technology that has to specially gain access to the home system, the incoming time to the mobile station can thus be shortened. In this way, the incoming processing can be executed smoothly and services to users can be improved.

Incidentally, the broadcasting means may well be the one that adds the'address of the communication exchange of the destination of broadcasting to the subscriber information and broadcasts the subscriber information having the address added thereto through a terrestrial common channel. According to this construction, the subscriber information is broadcasted in the signal form that is common to each communication system. Therefore, the communication exchange on the reception side can reliably receive and register the subscriber information.

The broadcasting means described above may well be the one that adds the address of the communication exchange of the destination of broadcasting to the subscriber information and broadcasts the subscriber information to which this address is added through a satellite communication channel. This construction can mitigate congestion of the terrestrial common channel when the line connection requested is transmitted and received through the terrestrial common channel in comparison with the case where the subscriber information, too, is broadcasted through the terrestrial common channel. Therefore, the incoming time can be further shortened and services to users can be further improved.

The communication exchange of the mobile communication system may be provided either to the terrestrial cellular telephone system or to the satellite cellular telephone system. According to this construction, line switching control to the mobile station can be accomplished by merely looking up the registering means of the own system even when the system is capable of roaming among terrestrial cellular telephone systems over several countries or among the terrestrial cellular telephone systems and the satellite telephone systems. Consequently, even though the system is large in scale as a whole, the incoming time to the mobile station can be drastically reduced.

The present invention may further include a specific communication system inclusive of a specific mobile communication system determined in advance and communication systems other than the specific communication system, inclusive of mobile communications systems other than the specific mobile communication system. In this case, the communication exchanges of all the mobile communication systems have means for broadcasting the subscriber information transmitted from the mobile station to only the communication exchange of other specific communication system so as to register the subscriber information in the communication exchange of other specific communication system. The specific mobile communication system has first registering means for registering the subscriber information transmitted from the mobile station for the purpose of line switching control. The communication exchanges of all the specific communication systems inclusive of the specific mobile communication systems have second registering means for registering the subscriber information broadcasted from the communication exchange of other mobile communication systems for the purpose of line switching control. The second registering means is provided to only the communication exchange of the specific communication system.

According to this construction, the second registering means for registering the subscriber information of all the mobile stations are provided to only the specific communication systems. In comparison with the case where means for registering the subscriber information are provided to all the communication systems, therefore, the system can be constituted more economically. In other words, the number of communication systems capable of roaming mutually can be increased economically, and greater convenience can be offered to the users. Incidentally, when the communication systems are allowed to roam among several countries, for example, a core system may well be a mobile communication system of a core country. Therefore, the roaming service can be offered more easily and services to the users can be improved.

The communication exchange of each mobile communication system other than the specific mobile communication systems may include local registering means for registering the subscriber information from a mobile station using the own system as the home system among the subscriber information transmitted from the mobile stations, and transferring means for transferring a line connection request signal to the communication exchange of the specific communication system when it receives the line connection request signal to the mobile station to which the subscriber information is not registered by the local registering means.

According to this construction, the communication exchange of each mobile communication system other than the specific communication system transfers the line connection request signal from the mobile station not using the own system as the home system to the communication exchange provided to the specific communication system that registers the subscriber information of all the mobile stations. Therefore, even when the line connection request is generated in the service area of the mobile communication system other than the specific mobile communication system, line connection can be reliably achieved.

### BRIEF DESCRIPTION OF THE DRAWINGS

Fig. 1 is a conceptual view showing a construction of a multi-communication system to which a communication exchange system of Embodiment 1 of this invention is applied.
Fig. 2 is a block diagram showing an internal construction of GMSC according to Embodiment 1.
Fig. 3 is a block diagram showing an internal. construction of a gateway exchange according to Embodiment 1.
Fig. 4 is a conceptual view showing a construction of a multi-communication system to which a communication exchange system of Embodiment 2 of this invention is applied.
Fig. 5 is a block diagram showing an internal construction of GMSC according to Embodiment 2.
Fig. 6 is a conceptual view showing a construction of a multi-communication system to which a communication exchange system according to Embodiment 3 is applied.
Fig. 7 is a block diagram showing an internal construction of GMSC according to Embodiment 3.
Fig. 8 is a conceptual view showing a construction of a multi-communication system according to the prior art.

### DETAILED DESCRIPTION OF THE PREFERRED EMBODIMENTS

Hereinafter, embodiments of the present invention will be explained in detail with reference to the accompanying drawings.

### Embodiment 1:

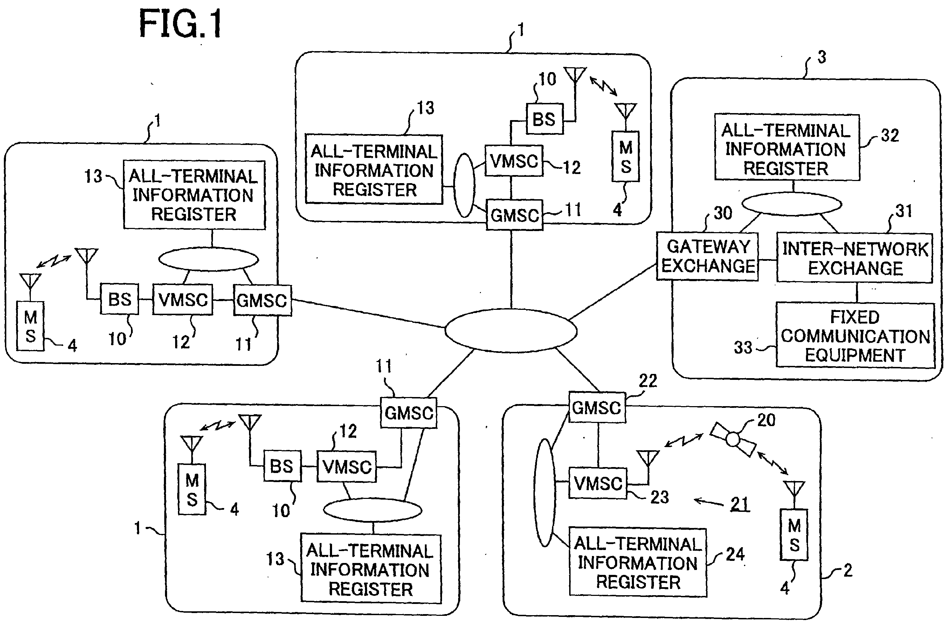

Fig. 1 is a conceptual view showing a construction of a multi-communication system to which a communication exchange system according to Embodiment 1 of the present invention is applied. This multi-communication system includes three terrestrial cellular telephone systems 1, one satellite cellular telephone system 2 and one fixed telephone system 3. Incidentally, the numbers of each system 1 to 3 is not limited but may well assume an arbitrary number.

The terrestrial cellular telephone systems 1 and the satellite cellular telephone system 2 have service areas unique to them, respectively, and are capable of mutually roaming among them. In other words, this multi-communication system includes a multi-mode type mobile station 4, and this mobile station 4 can be used even when moving into the service area of any of the cellular telephone systems 1 and 2. Each cellular telephone system 1, 2 and the fixed telephone system 3 can communicate with each other.

The explanation will be given in more detail. All of the three terrestrial cellular telephone systems 1 employ GSM as a communication method, and are operated in mutually different countries. The terrestrial cellular telephone system includes a plurality of base stations (BS) 10, a plurality of gateway mobile services switching centers (hereinafter called "GMSC") 11, a plurality of visitor mobile services switching centers (hereinafter called "VMSC") 12, and a plurality of all-terminal information registers 13. In Fig. 1, only one each of the base stations 10, GMSC 11, VMSC 12 and the all-terminal information registers 13 is shown for convenience's sake.

The base station 10 executes wireless communication with the mobile station 4. GMSC 11 is connected by cables to other terrestrial cellular telephone systems 1, satellite cellular telephone system 2 and fixed cellular telephone systems 3 in which these systems can roam mutually. GMSC 11 controls line switching among its own system 1 and other communication systems 1 to 3 described above. VMSC 12 controls line switching inside its own system 1 and governs a plurality of base stations 10.

The all-terminal information register 13 stores subscriber information of all the mobile stations 4 accommodated in the terrestrial cellular telephone systems 1 and in the satellite cellular telephone system 2, that is, mobile station discrimination information and positional information, in association with one another. A plurality of all-terminal information registers 13 is installed at positions physically spaced apart from one another such as in Tokyo and Osaka. The all-terminal information registers 13 are connected to all GMSC 11 and all VMSC 12. The access to the all-terminal information registers 13 of GMSC 11 and VMSC 12 is made through a terrestrial common channel.

The satellite cellular telephone system 2 includes one or a plurality of communication satellites 20 (only one being shown in Fig. 1 for convenience's sake), and a plurality of earth stations 21. The communication satellite 20 relays satellite communication signals exchanged between the mobile station 4 and the earth station 21. Each earth station 2.1 includes one or a plurality of GMSC 22, a plurality of VMSC 23 and the all-terminal information registers 24.

GMSC 22 is connected by cables to the terrestrial cellular telephone systems 1 and to the fixed telephone system 3 and controls line switching with each telephone system 1, 3. VMSC 23 controls line switching inside its own system 2 and conducts wireless communication with the mobile stations 4 through the communication satellites 20. The all-terminal information register 24 is connected to all GMSC 22 and all VMSC 23. In the satellite cellular telephone system 2, the access to the all-terminal information registers 24 is made through the terrestrial common channel.

The fixed telephone system 3 includes a plurality of gateway exchanges 30, a plurality of inter-network exchanges 31, all-terminal information registers 32 and fixed communication equipment 33. The gateway exchange 30 has the same function as that of GMSC 11. In other words, the gateway exchange 30 is connected by cables to the terrestrial cellular telephone system 1 and to the satellite cellular telephone system 2, and controls line switching among these cellular telephone systems 1 and 2. The inter-network exchange 31 has a function similar to that of VMSC 12 and controls line switching inside its own system 3. The all-terminal information register 32 is connected to all the gateway exchanges 30 and to all the inter-network exchange 31. In the fixed telephone system 3, the access to the all-terminal information register 32 is made through a terrestrial common channel.

In the multi-communication system described above, the terrestrial cellular telephone system 1, the satellite cellular telephone system 2 and the fixed telephone system 3 are connected through GMSC 11, 22 and the gateway exchanges 30. In this embodiment 1, a system including GMSC 11, 22 of each system 1 to 3, the gateway exchanges 30 and the all-terminal information registers 12, 24 and 32 corresponds to the communication exchange system described in the scope of claim for patent.

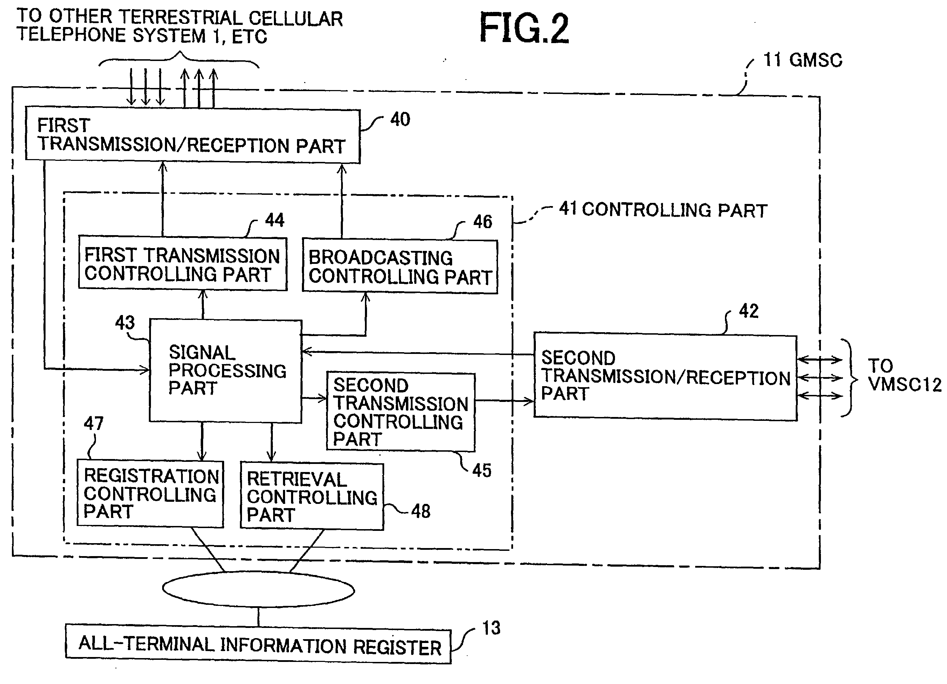

Fig. 2 is a block diagram showing the internal construction of GMSC 11 of the terrestrial cellular telephone system 1. Incidentally, GMSC 22 of the satellite cellular telephone system 2 has a similar construction to the construction of this GMSC 11.

GMSC 11 includes a first transmission/reception part 40, a controlling part 41 and a second transmission/reception part 42. The first transmission/reception part 40 is connected to other cellular telephone systems 1, the satellite cellular telephone system 2 and the fixed telephone system 3. The first transmission/reception part 40 transmits and receives various signals among other telephone systems 1 to 3.

More concretely, the first transmission/reception part 40 receives control signals and communication signals transmitted from other telephone systems 1 to 3. The control signals include a line connection request signal and a subscriber information signal. The line connection request signal is the signal for requesting line connection to the mobile station 4. The subscriber information signal is the signal having the subscriber information including identification information of the mobile station 4 and its positional information. The first transmission/reception part 40 transmits the control signal and the communication signal to other telephone systems 1 to 3. The first transmission/reception part 40 gives each signal it receives to the controlling part 41 and receives the signal to be transmitted from the controlling part 41.

The second transmission/reception part 42 is connected to VMSC 12 inside its own system. The second transmission/reception part 42 receives the control signals and the communication signals typified by the subscriber information signal transmitted from VMSC 12, and transmits the control signals and the communication signals to VMSC 12. The second transmission/reception part 42 gives each signal it receives to the controlling part 41 and receives each signal to be transmitted from the controlling part 41.

The controlling part 41 corresponds to a control center of GMSC 11, and executes various processing necessary for line switching. More concretely, the controlling part 41 includes a signal processing part 43, a first transmission controlling part 44, a second transmission controlling part 45, a broadcasting controlling part 46, a registration controlling part 47 and a retrieval controlling part 48.

The signal processing part 43 processes the signals outputted from the first and second transmission/reception parts 40 and 42. More concretely, the signal processing part 43 registers the subscriber information of the mobile stations 4 to the all-terminal information register 13 at the time of position registration and broadcasts the subscriber information to other telephone systems 1 to 3.

The explanation will be given in more detail. A mobile station 4 existing inside the own system 1 transmits the position registration request signal to the nearest base station 10 at the time of making of power, for example. The position registration request signal includes mobile station identification information. Receiving the position registration request signal, the base station 10 transmits the subscriber information signal including the mobile station identification information and the positional information to VMSC 12. VMSC 12 transfers this subscriber information signal to GMSC 11.

Receiving this subscriber information signal, the second transmission/reception part 42 of GMSC 11 transfers the subscriber information signal to the signal processing part 43 inside the controlling part 41. The signal processing part 43 extracts the mobile station identification information and the positional information from the subscriber information signal it receives, and gives this positional information, etc, to the registration controlling part 47. The registration controlling part 47 gains access to the all-terminal information register 13 through the terrestrial common channel and registers the positional information to the all-terminal information register 13 in association with the mobile station identification information.

The signal processing part 43 gives the subscriber information signal so received to the broadcasting controlling part 46. The broadcasting controlling part 46 adds the address of the destination of broadcasting to the subscriber information signal. In this case, the broadcasting controlling part 46 adds the addresses of GMSC 11, 22 of other telephone systems 1 to 3 and the addresses of the gateway exchanges 30 to the subscriber information signal.

The broadcasting controlling part 46 thereafter gives the subscriber information signal with this address to the first transmission/reception part 44. The first transmission/reception part 44 receives this subscriber information signal and broadcasts this subscriber information signal to other telephone systems 1 to 3 in accordance with the address of the subscriber information signal so received through the terrestrial common channel.

When receiving the subscriber information signal broadcasted from other cellular telephone systems 1 and 2, the signal processing part 43 registers the subscriber information in the subscriber information signal to the all-terminal information register 13 through the registration controlling part 47.

As described above, GMSC 11 registers the subscriber information transmitted from the mobile station 4 to the all-terminal information register 13, and broadcasts this subscriber information to other telephone systems 1 to 3. GMSC 11 also registers the subscriber information broadcasted from other cellular telephone systems 1 and 2 to the all-terminal information register 13. In consequence, the subscriber information of all the mobile stations 4 is registered to the all-terminal information register 13.

Further, the signal processing part 43 controls line switching on the basis of the subscriber information registered to the all-terminal information register 13. It will be assumed, for example, that a mobile station 4 existing in the service area of own system 1 transmits the line connection request signal. In this case, the second transmission/reception part 42 receives the line connection request signal, and gives it to the signal processing part 43 of the controlling part 41.

The signal processing part 43 extracts the identification information of the mobile station 4 of the connection destination contained in the line connection request signal and gives this mobile station identification information to the retrieval controlling part 48. The retrieval controlling part 48 gains access to the all-terminal information register . 13 and acquires the positional information corresponding to the given mobile station identification information. In this case, the subscriber information of all the mobile stations 4 accommodated in all the cellular telephone systems 1 and 2 are registered to the all-terminal information register 13. Therefore, the retrieval controlling part 48 can reliably detect the positional information corresponding to the given mobile station identification information. The retrieval controlling part 48 gives the positional information, etc, so acquired to the signal processing part 43.

The signal processing part 43 judges whether or not the mobile station 4 exists within the service area of its own system 1 on the basis of the positional information so given. When the mobile station 4 does not exist within the service area of its own system 1, that is, when the mobile station 4 exists within the service areas of other cellular systems 1 and 2, the signal processing part 43 transfers the line connection request signal to the cellular telephone system represented by the positional information through the terrestrial common channel.

More concretely, the signal processing part 43 gives the line connection request signal and the positional information to the first transmission controlling part 44. The first transmission controlling part 44 adds the address of the cellular telephone system corresponding to the positional information to the line connection request signal and gives it to the first transmission/reception part 40. The first transmission/reception part 40 transmits the line connection request signal to the cellular telephone system designated by this address through the terrestrial common channel.

As described above, since the subscriber information of all the mobile stations 4 is registered to all-terminal information register 13, GMSC 11 can directly transfer the line connection request signal to the mobile communication system in which the mobile station 4 exists.

On the other hand, when the mobile station 4 exists inside the service area of its own system, the signal processing part 43 specifies VMSC 12 to which the line connection request signal is to be transferred. The signal processing part 43 reports VMSC 12 so specified and transfers the line connection request signal to the second transmission controlling part 45. The second transmission controlling part 45 adds the address of the specified VMSC 12 to the line connection request signal and then gives this line connection request signal to the second transmission/reception part 42.

The second transmission/reception part 42 transmits the line connection request signal to VMSC 12 corresponding to the address through the terrestrial common channel. VMSC 12 executes broadcast call on the basis of the line connection request signal through the terrestrial common channel and transfers the response signal, that is returned from the mobile station 4 through the terrestrial common channel, to GMSC 11. The signal processing part 43 of GMSC 11 executes line connection on the basis of this response signal. In consequence, line switching is achieved.

There is also the case where the line connection request signal is transferred to GMSC 11 from other telephone systems 1 to 3. In this case, GMSC 11 confirms the position of the mobile station 4 as the object station of line connection and executes the line connection processing. More concretely, the signal processing part 43 inside GMSC 11 retrieves the all-terminal information register 13 on the basis of the mobile station identification information in the line connection request signal and confirms the position of the mobile station 4. Thereafter, the signal processing part 43 specifies VMSC 12 to which the line connection request signal is to be transferred, and then executes the similar processing described above in the same way as in the case where the mobile station 4 exists inside the service area of its own system 1.

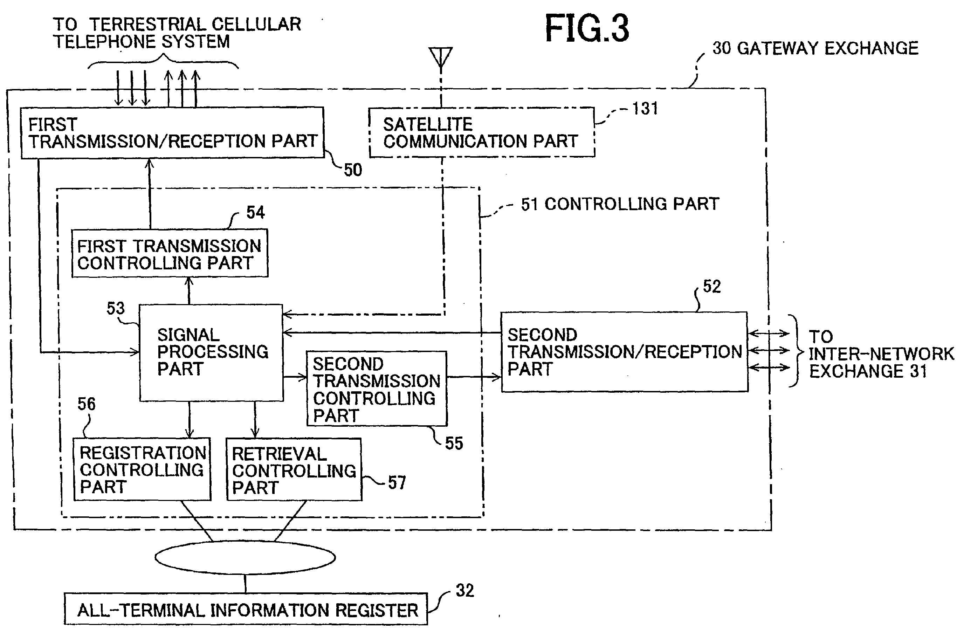

Fig. 3 is a block diagram showing the internal construction of the gateway exchange 30 of the fixed telephone system 3. The gateway exchange 30 has substantially the same function as that of GMSC 40. Therefore, it has substantially the same construction as that of GMSC 11 shown in Fig. 2. However, the gateway exchange 30 is different from GMSC 11 in that it does not include the broadcasting controlling part 46 of GMSC 11. In other words, the fixed telephone system 3 does not receive the position registration request signal from the mobile station 4 and does not therefore acquire the subscriber information to be broadcasted to other communication systems.

More specifically, the gateway exchange 30 includes a first transmission/reception part 50, a controlling part 51 and a second transmission/reception part 52. The controlling part 51 includes a signal processing part 53, a first transmission controlling part 54, a second transmission controlling part 55, a registration controlling part 56 and a retrieval controlling part 57.

Receiving the subscriber information signal broadcasted from the terrestrial cellular telephone system 1, etc, the controlling part 51 of the gateway exchange 30 registers the subscriber information to the all-terminal information register 32. In other words, the subscriber information of all the mobile stations 4 is registered to the all-terminal information register 32.

Therefore, when the line connection request is transmitted from the fixed communication equipment 33 to the mobile station 4 through the inter-network exchange 31, the gateway exchange 30 refers to the registration content of the all-terminal information register 32. In consequence, the line connection request signal can be directly transferred to the cellular telephone system 1 to 2 in which the mobile station 4 as the line connection object exists.

According to Embodiment 1 described above, an arbitrary mobile communication system can broadcast the subscriber information of the mobile station to all the mobile communication systems and the fixed telephone systems capable of roaming, at the time of position registration. Therefore, the mobile communication system and the fixed telephone system 3 that receives the line connection request signal can gain direct access to the visit system.

In comparison with the prior art technology that has to rely on the home system, therefore, the incoming time to the mobile station 4 can be drastically reduced. In other words, the incoming processing can be executed smoothly and service quality for users can be improved. This is particularly effective in a complicated multi-communication system that allows roaming between GSM and a satellite cellular telephone system.

### Embodiment 2:

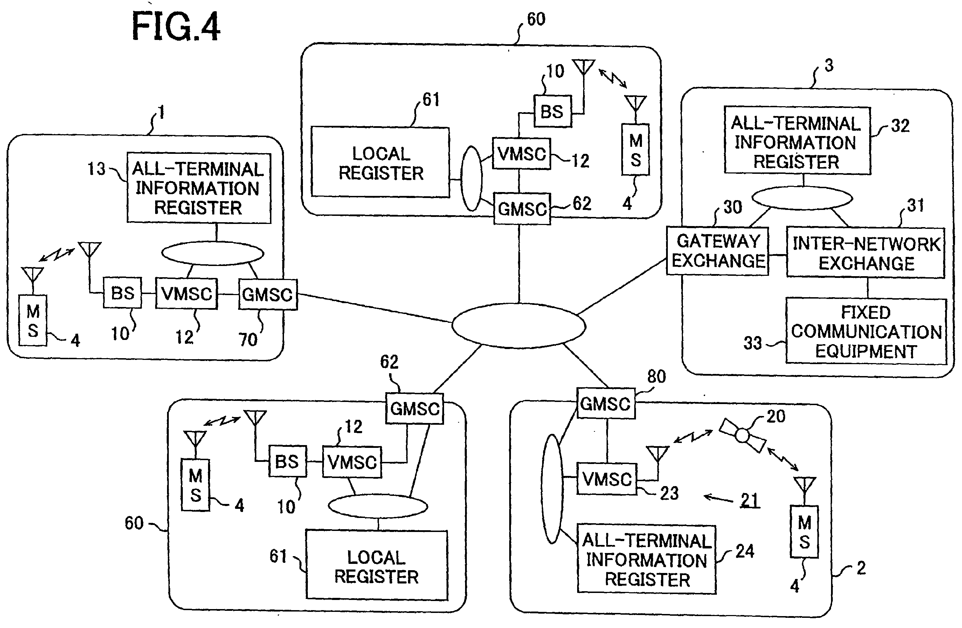

Fig. 4 is a conceptual view showing a construction of a mobile communication system according to Embodiment 2 of the present invention. In Fig. 4, like reference numerals are used to identify like functional portions as in Fig. 1.

Embodiment 1 described above represents the case where all of the terrestrial cellular telephone system 1, the satellite cellular telephone system 2 and the fixed telephone system 3 constituting the multi-communication system including the all-terminal information register 13, 24 and 32. In contrast, in this Embodiment 2, only a specific communication system or systems include the all-terminal information register among a plurality of communication systems constituting the multi-communication system. In this way, the memory capacity of the register can be reduced when the multi-communication system is considered as a whole.

More specifically, in this Embodiment 2, two terrestrial cellular telephone systems 60 of the terrestrial cellular telephone system 1 in Embodiment 1 are set in advance to non-core systems. In other words, one terrestrial cellular telephone system 1, the satellite cellular telephone system 2 and the fixed telephone system 3 are set in advance to the core systems. Here, the term "core system" may well be a communication system constituted in a country as an economical core in areas covering a plurality of countries, or a communication system constituted in an area as an economical core in one country, for example.

In this case, the construction of the fixed telephone system 3 is exactly the same as that of Embodiment 1. On the other hand, the terrestrial cellular telephone system 1 and the satellite cellular telephone system 2 are the same as those of Embodiment 1 with the exception that the function of the broadcasting controlling part 46 is different.

When the subscriber information signal is given from the signal processing part 43, the broadcasting controlling part 46 of GMSC 70 of the terrestrial cellular telephone system 1 and the broadcasting controlling part 46 of GMSC 80 of the satellite cellular telephones system 2 add only the address of the specific communication system to the subscriber information signal. The specific communication system in this case is the communication system that is set in advance as the core system. In other words, the subscriber information signal is not broadcasted to all the communication systems but is transmitted by copy transmission to only the core system.

On the other hand, the construction of the terrestrial cellular telephone system 60 as the communication system other than the core system is greatly different from the construction in Embodiment 1. More concretely, the terrestrial cellular telephone system 60 includes a local register 61 in place of the all-terminal information register and GMSC 62 that is functionally different from GMSC in Embodiment 1. The base station 10 and VMSC 12 are the same as those of Embodiment 1. The local register 61 registers the subscriber information of only the mobile stations 4 using the terrestrial cellular telephone system 60 as the home system. Therefore, the local register has a smaller memory capacity than the all-terminal information registers 13, 24 and 32.

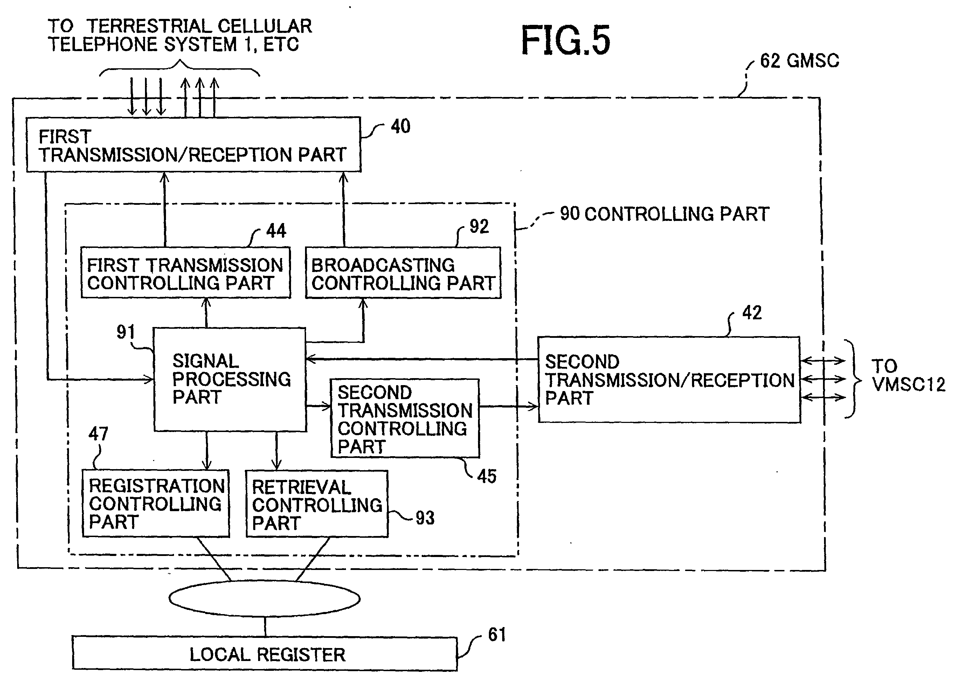

Fig. 5 is a block diagram showing an internal construction of GMSC 62. This GMSC 62 includes a first transmission/reception part 40 and a second transmission/reception part 42 in the same way as in Embodiment 1, and further includes a controlling part 90 functionally different from that of Embodiment 1. The controlling part 90 includes a first transmission controlling part 44, a second transmission controlling part 45 and a registration controlling part 47 each having the same function as that of the counterpart in Embodiment 1. Further, the controlling part 90 includes a signal processing part 91 functionally different from that of Embodiment 1, a broadcasting controlling part 92 and a retrieval controlling part 93.

When receiving the subscriber information signal for position registration from the mobile station 4 existing inside its own system 60 through the second transmission/reception part 42, the signal processing part 91 judges whether or not the mobile station 4 uses the own system 60 as the home system.

When the mobile station 4 is the one using the own system 60 as the home system, the signal processing part 91 registers the subscriber information of this mobile station 4 to the local register 61 through the registration controlling part 47. On the other hand, when the mobile station 4 does not use the own system 60 as the home system, the signal processing part 91 does not conduct registration to the local register 61 but broadcasts the subscriber information signal to only the core system through the broadcasting controlling part 92 and through the first transmission/reception part 40. Consequently, the core system can register the subscriber information of the mobile stations 4 existing inside the service area of the terrestrial cellular telephone system 60 to the all-terminal information registers 13, 24 and 32 inside the own systems 1, 2 and 3.

Receiving the line connection request signal from the mobile station 4 existing inside the service area of the own system 60 through the second transmission/reception part 42, the signal processing part 91 gives the mobile station identification information of the line connection object station to the retrieval controlling part 93. The retrieval controlling part 93 gains access to the local register 71 and retrieves the subscriber information of the mobile station 4 on the basis of the given mobile station identification information.

When the mobile station 4 as the line connection object station is the mobile station using the own system 60 as the homes system, the retrieval controlling part 93 can retrieve the subscriber information of the mobile station 4 from the local register 71. Moreover, the position indicated by this subscriber information exists inside the service area of the own system 60. The retrieval controlling part 93 gives the subscriber information to the signal processing part 91. The signal processing part 91 transfers the line connection request signal to VMSC 12 governing the position, at which the mobile station 4 as the line connection object station exists, on the basis of this subscriber information through the second transmission controlling part 45 and through the second transmission/reception part 42.

On the other hand, when the mobile station 4 as the line connection object station is not the mobile station using the own system 60 as the home system, the subscriber information of the mobile station 4 is not registered to the local register 61. Even when the mobile station 4 uses the own system 60 as the home system, the subscriber information of this mobile station 4 is not registered to the local register 61 if the mobile station 4 exists in the service area of other terrestrial cellular telephone systems 1, etc. However, the subscriber information of all the mobile stations 4 is registered to the all-terminal information registers 13, 24 and 32 provided to the core systems 1, 2 and 3.

Therefore, the retrieval controlling part 93 returns the non-registered signal to the signal processing part 91 unless the subscriber information of the mobile station 4 as the line connection object station is registered to the local register 61. Receiving the non-registered signal, the signal processing part 91 transfers the line connection request signal to other terrestrial cellular telephone system 1 or the satellite cellular telephone system 2 or the fixed telephone system 3 in the proximity of the own system 60 in order to gain access to the all-terminal information register provided at the nearest position to its own system 60.

When receiving the line connection request signal, each system 1, 2 or 3 as the core system refers to the all-terminal information register 13, 24 or 32 and specifies the visit system of the mobile station 4 as the line connection object station. Thereafter, each system 1, 2 or 3 directly transfers the line connection request signal to the visit system of the mobile station 4.

As described above, according to Embodiment 2, the all-terminal information register 13, 24 or 32 is provided to only each system 1, 2 or 3 as the core system. Therefore, in comparison with Embodiment 1 wherein all the communication systems include the all-terminal information register, the overall memory capacity of the multi-communication system can be reduced. In other words, the multi-communication system can be constituted more economically, and service quality to the users can be further improved.

### Embodiment 3:

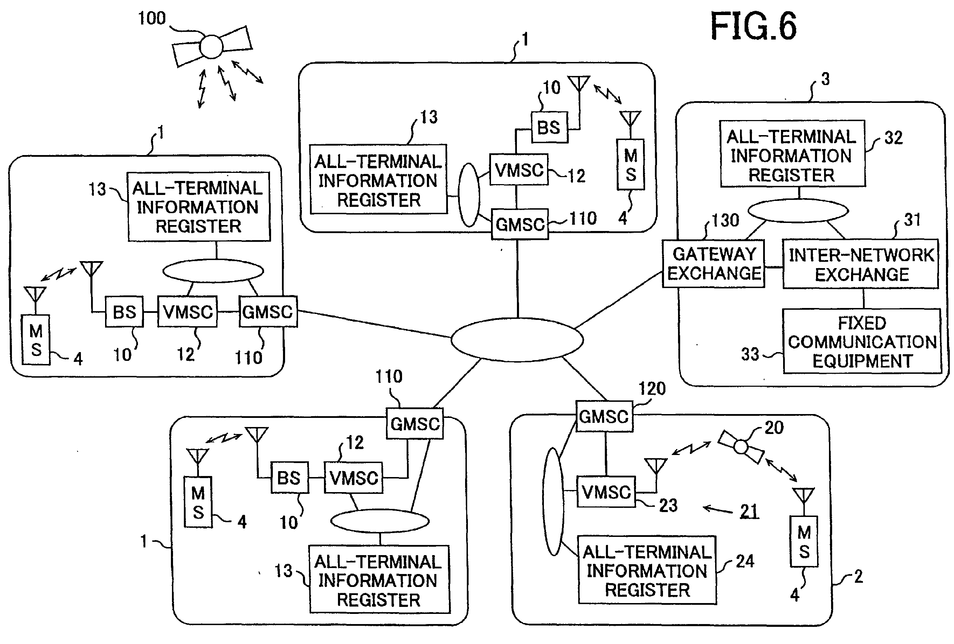

Fig. 6 is a conceptual view showing a construction of a multi-communication system to which a communication exchange system according to Embodiment 3 of the present invention is applied.

In Embodiments 1 and 2 described above, broadcasting of the subscriber information is made through the cable terrestrial common channel. In contrast, in this Embodiment 3, broadcasting of the subscriber information signal is made through a satellite communication channel. Since the terrestrial common channel is not used for broadcasting, congestion of the terrestrial common channel can be mitigated. Therefore, the line connection request signal can be transmitted and received more smoothly, and the time required for incoming can be further shortened.

More specifically, the multi-communication system according to Embodiment 3 includes a communication satellite 100 for broadcasting. The communication satellite 100 may be exclusively launched for broadcasting or the communication satellite of other communication systems as typified by the communication satellite 20 provided to the satellite cellular telephone system 3 may be utilized. GMSC 110 of the terrestrial cellular telephone system 1, GMSC 120 of the satellite cellular telephone system 2 and the gateway exchange 130 of the fixed telephone system 3 in this multi-communication system are able to transmit and receive the subscriber information through the communication satellite 100.

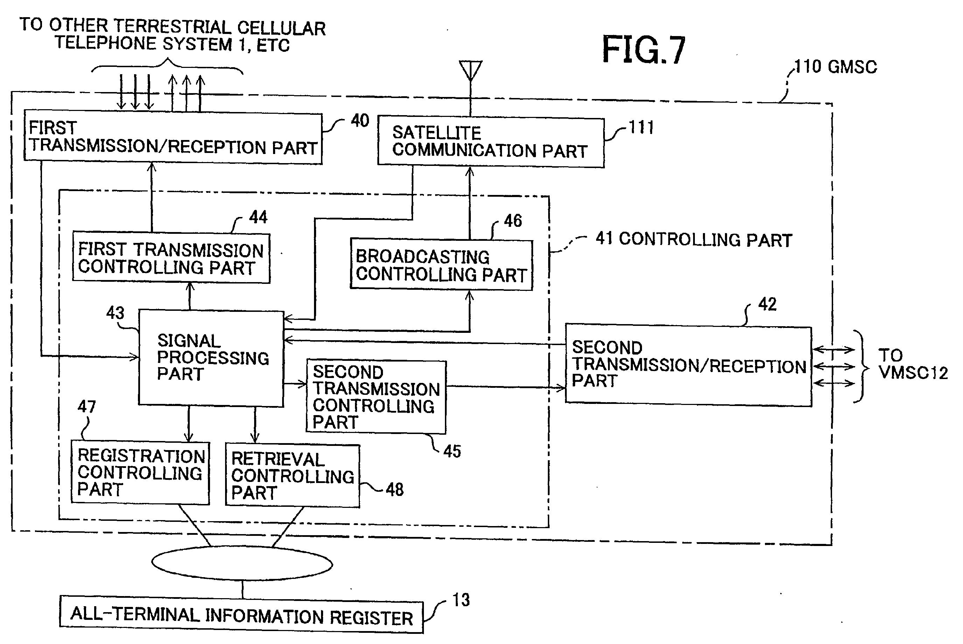

Fig. 7 is a block diagram showing an internal construction of GMSC 110 according to Embodiment 3. Incidentally, an internal construction of GMSC 120 is the same as the internal construction of GMSC 110.

GMSC 110 includes a satellite communication part 111 in addition to the construction in Embodiment 1. The satellite communication part 111 is connected to a broadcasting controlling part 46 and transmits and receives the subscriber information signal through the communication satellite 100. More concretely, receiving the subscriber information signal from the broadcasting controlling part 46, the satellite communication part 111 converts this subscriber information signal to a satellite communication signal and then broadcasts this signal to other telephone systems 1, 2 and 3 through the communication satellite 100. In other words, the satellite communication part 111 broadcasts the subscriber information signal through the satellite communication channel.

Receiving the subscriber information signal broadcasted from other cellular telephone systems 1 and 2, the satellite communication part 111 gives the subscriber information signal to the signal processing part 43. The signal processing part 43 gives this subscriber information to the signal processing part 43. The signal processing part 43 extracts the mobile station identification information and the positional information from this subscriber information signal and registers the mobile station identification information to the all-terminal information register 13 through the registration controlling part 47.

Incidentally, in Embodiment 2 wherein the core system is set, the destination of broadcasting is of course the communication system as the core system, and the system that registers the subscriber information of all the mobile stations 4 is of course the communication system as the core system.

The gateway exchange 130 of the fixed telephone system 3 includes the satellite communication part 131 as indicated by two-dot-chain line in Fig. 3. This satellite communication part 131 receives the subscriber information signal broadcasted from other cellular telephone systems 1 and 2 through the communication satellite 100 and gives the subscriber information signal so received to the signal processing part 53. Therefore, the satellite communication part 131 does not have the function of transmitting the satellite communication signal.

As described above, Embodiment 3 broadcasts the subscriber information signal through the satellite communication channel, and can mitigate congestion of the terrestrial common channel. Therefore, the line connection request signal can be transmitted and received more smoothly, the incoming time can be further reduced and eventually, service quality for users can be further improved.

### Other Embodiments:

Though several embodiments of the present invention have thus been given, the present invention is not particularly limited thereto. For example, the foregoing embodiments represent the case where the subscriber information of the mobile station 4 is shared among different mobile communication systems. However, the present invention can be easily applied to the case where a plurality of unit communication systems is constituted with a plurality of core exchanges as the core in one mobile communication system, for example. In other words, if the core exchange is GMSC and other exchanges connected to this core exchange are VMSC, one mobile communication system can be constituted into a multi-communication system.

## Claims

1. A communication exchange system including communication exchanges, said communication exchanges being respectively provided to a plurality of communication systems inclusive of a plurality of mobile communication systems and capable of roaming mutually, and controlling line exchange to a mobile station on the basis of subscriber information of said mobile station upon receiving a line connection request signal to said mobile station, wherein said communication exchange of said mobile communication system comprises:
first registering means for registering the subscriber information transmitted from said mobile station for said line exchange control; and
broadcasting means for broadcasting the subscriber information transmitted from said mobile station to said communication exchange of other communication system to register the subscriber information transmitted from said mobile station to said communication exchange of said other communication system.

2. A communication exchange system according to claim 1, wherein said broadcasting means adds an address of said communication exchange as the destination of said broadcasting to the subscriber information, and broadcasts the subscriber information having the address added thereto through a terrestrial common channel.

3. A communication exchange system according to claim 1, wherein said broadcasting means adds an address of said communication exchange of the destination of broadcasting to the subscriber information, and broadcasts the subscriber information having the address added thereto through a satellite communication channel.

4. A communication exchange system according to claim 1, wherein said communication exchange of said other communication system includes second registering means for registering the subscriber information broadcasted by said broadcasting means for said line exchange control.

5. A communication exchange system according to claim 1, wherein said communication exchange of said mobile communication system is provided to a terrestrial cellular telephone system or to a satellite cellular telephone system.

6. A communication exchange system including communication exchanges, said communication exchanges being provided respectively to a plurality of communication systems inclusive of a plurality of mobile communication systems and capable of roaming mutually, and controlling line exchange to a mobile station on the basis of subscriber information of said mobile station upon receiving a line connection request signal to said mobile station, wherein:
said plurality of communication systems include a specific communication system including a specific mobile communication system determined in advance, and communication systems other than said specific communication system, including mobile communication systems other than said specific communication system;
said communication exchanges of all of said mobile communication systems include means for broadcasting the subscriber information transmitted from said mobile station to only said communication exchanges of said other specific communication systems so as to register the subscriber information in said communication exchanges of said other specific communication systems;
said specific mobile communication system includes first registering means for registering the subscriber information transmitted from said mobile station for line switching control;
said communication exchanges of all of said specific communication systems inclusive of said specific mobile communication systems include second registering means for registering the subscriber information broadcasted from said communication exchanges of said other mobile communications systems for line switching control; and
said second registering means is provided to only said communication exchange of said specific communication system.

7. A communication exchange system according to claim 6, wherein said communication exchange of said mobile communication systems other than said specific mobile communication system includes:
local registering means for registering the subscriber information, among those transmitted from said mobile station, from said mobile station using a system of its own as a home system, for line switching control; and
transferring means for transferring said line connection request signal to said communication exchange of said specific communication system when receiving said line connection request signal to said mobile station to which the subscriber information is not registered by said local registering means.

8. An exchange for mobile communication, for controlling line switching with a mobile station on the basis of subscriber information of said mobile station when a line connection request to said mobile station is generated, comprising:
means for registering the subscriber information transmitted from said mobile station for said line connection control;
means for broadcasting the subscriber information transmitted from said mobile station to register the subscriber information to a communication exchange of other communication systems determined in advance as a roaming object; and
means for registering the subscriber information transmitted from said communication exchange of said other mobile communication systems for said line switching control.
